# DEMANDE DE BREVET EUROPEEN

(11) **EP 2 239 712 A1**
(43) Date de publication de la demande: **13.10.2010**
(21) Numéro de dépôt: 09305309.8
(22) Date de dépôt: 09.04.2009
(51) Int. Cl.: G07F 7/10

(54) **Procédé pour personnaliser un dispositif électronique, procédé de traitement de données et dispositif associés**

(71) Demandeur: Gemalto SA, 92190 Meudon (FR)
(72) Inventeur: Joffray, Olivier, 78810 FEUCHEROLLES (FR); Desjardins, Jean-Michel, 78370 PLAISIR (FR)

(57) **Abrégé**

L'invention concerne tout dispositif électronique tel une carte à puce, un passeport, un dongle ou tout autre objet nécessitant une personnalisation du contenu d'une mémoire. Plus précisément, l'invention prévoit un procédé pour traiter une donnée d'un conteneur stocké dans une mémoire, ledit procédé étant mis en oeuvre par le dispositif électronique en exploitant notamment une table des identificateurs. L'invention prévoit en outre une étape préalable pour associer un identificateur de donnée à une donnée d'un conteneur et créer ladite table des identificateurs.

## Description

L'invention concerne le domaine des dispositifs électroniques nécessitant une personnalisation de données mémorisées dans une ou plusieurs mémoires. L'invention concerne plus particulièrement mais de manière non limitative, les objets électroniques portables sécurisés comme les cartes à puce, les passeports électroniques ou tout autre objet contenant des données dont certaines sont propres et dédiées à un propriétaire, un utilisateur... De tels dispositifs trouvent notamment leurs applications dans la santé, la banque, les télécommunications ou encore le contrôle d'identité.

Une carte à puce, par exemple sous la forme d'un module de sécurité d'un abonné à un service de télécommunication sans fil ou encore une carte de débit, est tout d'abord élaborée par un fabricant de cartes avant d'être remise à un utilisateur. Le corps en matière plastique de cette carte est généralement personnalisé graphiquement aux couleurs d'un opérateur de télécommunication ou bancaire.

La puce quant à elle comporte un calculateur électronique communiquant avec le monde extérieur au moyen de contacts électriques ou d'une antenne. Le calculateur électronique comporte notamment une ou plusieurs mémoires, une unité de traitement apte à offrir et mettre en oeuvre des traitements portant sur le contenu desdites mémoires. Par exemple, il est possible au monde extérieur de demander à l'unité de traitement d'écrire une information dans une mémoire de données au moyen d'une commande d'écriture supportée par l'unité de traitement. A la réception d'une telle commande, l'unité de traitement met à jour le contenu d'une mémoire à l'aide d'une valeur et d'une adresse qui lui sont transmises sous la forme de paramètres de la commande d'écriture. Il en est de même pour lire une information préalablement écrite dans une mémoire.

Afin de structurer le contenu d'une mémoire d'un dispositif électronique, on utilise souvent une structure arborescente de fichiers eux-mêmes groupés sous la forme de répertoires. Ainsi par exemple le solde d'un porte monnaie électronique est matérialisé par une donnée contenue dans un enregistrement d'un fichier lui-même contenu dans un répertoire. Ledit enregistrement ou directement le fichier est couramment nommé « conteneur » de la donnée « balance » du porte-monnaie.

Une carte de paiement est un titre sécurisé. Pour ce type de produit, il est nécessaire avant de pouvoir mettre en oeuvre une opération de débit de réaliser une authentification de l'utilisateur de la carte. Ce dernier doit saisir ainsi un code secret qui lui est personnel. Une donnée secrète de référence qui est comparée avec la valeur saisie par l'utilisateur est également contenue dans un conteneur de la carte. Ce conteneur peut-être un enregistrement d'un fichier ou un fichier dédié à la sécurité. Le conteneur peut être également un répertoire.

Dans ce cas, ladite valeur de référence fait partie de données « système » d'un descripteur matérialisant ledit répertoire. Quelle que soit la nature du conteneur, la valeur initiale d'un porte-monnaie, la valeur de référence d'un code secret ou encore le nom d'un utilisateur d'une carte à puce doivent être écrits dans la mémoire de ladite carte avant que celle-ci soit remise à son utilisateur. Ces valeurs sont dédiées à une unique personne : l'utilisateur final de la carte. Ce type d'information n'est en général pas initialisé par le fabricant de cartes. Celui-ci vend des lots de cartes identiques à un opérateur qui se charge de personnaliser une à une celles-ci pour chacun de ses clients ou usagers. On parle alors d'une étape de personnalisation électrique d'un dispositif électronique.

Pour mettre en oeuvre un processus de personnalisation électrique, il est connu de demander au fabricant de cartes ou de passeports d'initialiser l'ensemble des données communes à un lot de cartes ou de passeports. Ainsi, dans l'exemple d'une structure de mémoire sous la forme d'une arborescence de fichiers, le fabricant initialise le contenu d'une mémoire de chaque carte ou passeport à l'aide de répertoires et/ou de fichiers dont le contenu est écrit à l'exception des données qui seront spécifiques au futur utilisateur de la carte ou du passeport.

Lors de l'ouverture d'un compte bancaire d'un usager, un opérateur bancaire doit personnaliser une carte en écrivant à son tour les données spécifiques audit usager. Pour cela, l'opérateur utilise une ou plusieurs commandes d'écriture pour finaliser la personnalisation de la carte.

Selon les solutions connues, cette personnalisation nécessite un nombre qui peut être conséquent de commandes d'écriture mais aussi de commandes de sélection pour identifier les fichiers concernés par les écritures. Plus les commandes sont nombreuses plus le processus de personnalisation est onéreux pour un opérateur.

Pour diminuer cet inconvénient, il est par exemple prévu de proposer aux opérateurs des commandes de personnalisation propres à leurs applications permettant un accès direct aux données à personnaliser. Toutefois, cette solution requière notamment que soient normalisés et connus les emplacements en mémoire desdites données. En outre, cela nécessite de mettre à disposition des commandes d'écriture dédiées à ces données et à une application particulière. Or, les dispositifs sont de plus en plus complexes. Ils supportent souvent une pluralité d'applications qui chacune peuvent également d'évoluer dans le temps. Ainsi, l'utilisation de ce type de commandes adaptées et dédiées se trouve inappropriée.

L'invention vise à résoudre les inconvénients de l'art antérieur en offrant la possibilité de traiter de manière rapide et efficace les données à personnaliser d'un dispositif électronique quelle que soit la nature des données, notamment s'il n'est pas possible de maîtriser et/ou connaître a priori les conteneurs desdites données.

A cette fin, il est prévu un procédé pour traiter une donnée d'un conteneur stocké dans une première mémoire d'un dispositif électronique, comportant :
- une étape de consultation de moyens d'association, lesdits moyens d'association permettant d'associer à une donnée d'un conteneur, un identificateur de donnée et une référence de donnée ;
- une étape de traitement de ladite donnée en exploitant ladite référence de donnée.

Selon un mode de réalisation préféré, l'étape de consultation d'un tel procédé peut consister à lire une entrée d'une table des identificateurs, ladite table pouvant être stockée dans une deuxième mémoire du dispositif, ladite entrée étant dédiée à la donnée à traiter et comprenant l'identificateur de donnée et la référence de donnée.

Selon ce mode de réalisation, l'étape de traitement peut être conditionnée au bon déroulement d'une étape préalable d'autorisation de ladite étape de traitement. Pour cela, l'étape d'autorisation peut exploiter un identificateur de sécurité présent en outre dans l'entrée de la table des identificateurs associée à la donnée traitée.

L'invention prévoit que la référence de donnée puisse permettre de pointer directement la donnée du conteneur dans la première mémoire de sorte que l'étape de traitement puisse consister à lire ou à modifier la donnée en exploitant la référence de donnée.

Selon une variante, l'étape de traitement peut consister à appliquer un script de traitement à la donnée en exploitant par exemple dans l'entrée d'une table des identificateurs la référence de donnée et une référence de script de traitement présente en outre dans l'entrée de la table des identificateurs et permettant de pointer un script de traitement stocké dans une troisième mémoire du dispositif.

L'invention offre par ailleurs la possibilité de prévoir un procédé de traitement comportant au préalable :
- une étape de création d'un conteneur de donnée ou de sélection d'une donnée d'un conteneur pour initialiser des moyens de pointage de ladite donnée dans la première mémoire du dispositif ;
- une étape pour associer à la donnée, un identificateur de donnée et une référence de donnée dont la valeur est définie en exploitant les moyens de pointage initialisés par l'étape de création de conteneur ou de sélection de donnée.

Selon un premier mode de réalisation, l'étape pour associer peut consister à créer une entrée dans la table des identificateurs, ladite entrée étant dédiée à la donnée et comprenant l'identificateur de donnée et la référence de donnée.

L'étape de création d'une entrée d'un tel procédé peut consister en outre à prévoir dans l'entrée de la table des identificateurs, un identificateur de sécurité pour conditionner au bon déroulement d'une étape d'autorisation un futur traitement de la donnée considérée.

Ladite étape de création d'une entrée peut en outre consister à prévoir dans l'entrée de la table des identificateurs, une référence de script, ladite référence de script permettant de pointer un script de traitement stocké dans une troisième mémoire du dispositif.

Selon une variante de réalisation, un procédé conforme à l'invention peut comporter une étape pour trier la table des identificateurs pour que les entrées de la table des identificateurs comportant un identificateur de sécurité identique soient par exemple contigües dans la table des identificateurs.

Le procédé peut en variante trier la table des identificateurs pour que les entrées de la table des identificateurs associées à des données destinées à être traitées selon une étape de traitement similaire ou conjointe soient contigües dans la table des identificateurs.

L'invention prévoit en outre d'adapter un dispositif électronique comprenant une première mémoire pour stocker une donnée dans un conteneur, pour qu'il comporte:
- des moyens d'association, lesdits moyens d'association permettant d'associer à une donnée d'un conteneur, un identificateur de donnée et une référence de donnée ;
- des moyens pour traiter une donnée d'un conteneur apte à mettre en oeuvre un procédé de traitement conforme à l'invention.

Selon un mode de réalisation préféré, les moyens d'association peuvent consister en une deuxième mémoire pour contenir une table des identificateurs et les moyens pour traiter une donnée d'un conteneur sont aptes à mettre en oeuvre un procédé de traitement exploitant ladite table des identificateurs.

Un tel dispositif électronique peut en outre comporter une troisième mémoire pour contenir un script de traitement de sorte que les moyens pour traiter une donnée d'un conteneur puissent mettre en oeuvre un procédé de traitement exploitant ledit script.

L'invention concerne également un dispositif électronique comportant en outre:
- des moyens de pointage d'une donnée d'un conteneur stocké dans la première mémoire du dispositif;
- des moyens pour initialiser les moyens d'association pour associer un identificateur à une donnée d'un conteneur apte à mettre en oeuvre un procédé conforme l'invention.

D'autres caractéristiques et avantages apparaîtront plus clairement à la lecture de la description qui suit et à l'examen des figures qui l'accompagnent parmi lesquelles :
- la figure 1 présente une structure connue de mémoire suivant une arborescence des fichiers et répertoires ;
- la figure 2 présente un exemple de table des identificateurs selon l'invention.

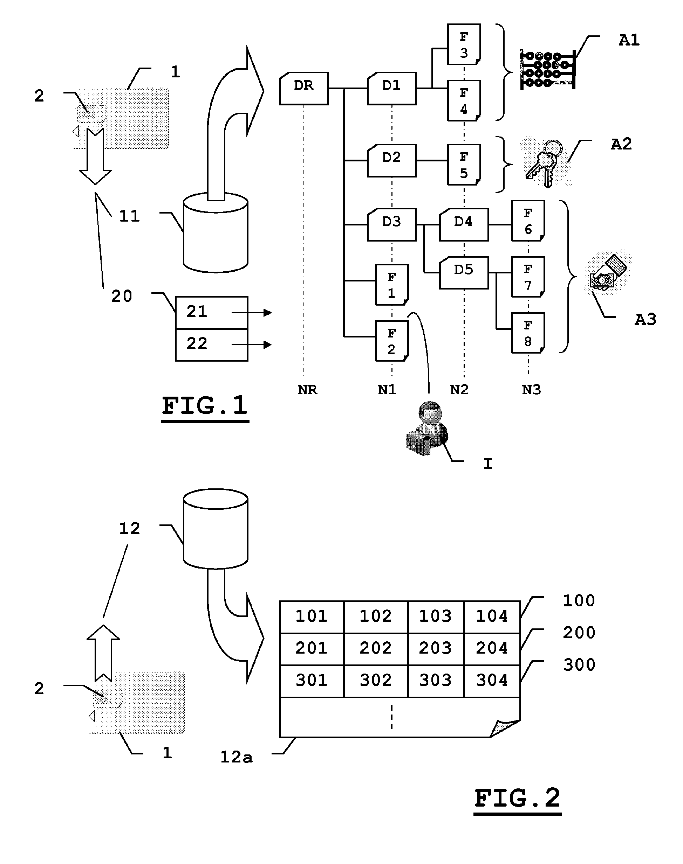

La figure 1 illustre une représentation connue du contenu d'une mémoire 11 d'un dispositif électronique 1 tel une carte à puce dont le calculateur électronique 2 héberge une pluralité d'applications A1, A2, A3. Selon ce mode de représentation arborescent à 4 niveaux NR, N1, N2 et N3, des fichiers F1 à F8 sont regroupés au moyen de répertoires DR, D1 à D5. Le répertoire principal ou répertoire racine est DR. Il regroupe les fichiers F1 et F2 ainsi que trois autres répertoires de niveau N1 : D1, D2 et D3. Le répertoire D1 regroupe les fichiers F3 et F4. Le répertoire D2 contient un fichier unique F5. Le répertoire D3 (de même niveau N1 que D1 et D2) groupe deux répertoires de niveau inférieur N2 : D4 et D5. A leur tour les répertoires D4 et D5 regroupent respectivement le fichier F6 et les fichiers F7 et F8.

Les données du dispositif électronique 1 sont ainsi réparties et classées. Selon l'exemple en liaison avec la figure 1, la mémoire 11 comporte plusieurs applications A1, A2, A3. Ainsi le répertoire D1 est dédié aux données d'une application de fidélité A1. La valeur d'un ou plusieurs compteurs est une donnée d'un conteneur : le fichier F3. Le répertoire D2 est dédié quant à lui aux données d'une application de contrôle d'accès A2. Le fichier F5 est le conteneur d'une liste de points d'accès qui sont autorisés à l'utilisateur de la carte. Le répertoire D3 est quant à lui dévolu aux données nécessaires au support d'une application A3 de type porte-monnaie électronique.

Ainsi le répertoire D5 héberge d'une part le fichier F7 conteneur de la balance courante du porte-monnaie, le fichier F8 conteneur de l'historique des dernières opérations de débit et/ou de crédit. Par ailleurs, ce type d'application requérant un haut niveau de sécurité, le fichier F6 permet de mémoriser la valeur de référence d'un secret dédié à l'utilisateur de la carte.

Selon une variante, la valeur de référence dudit secret pourrait être inscrite au moyen d'une structure de données venant en complément de données « système » associées au répertoire D4 en lieu et place du fichier F6.

Enfin selon l'exemple en liaison avec la figure 1, un fichier F2 permet de mémoriser des informations I dont le nom, le prénom de l'utilisateur de la carte. Ces deux informations sont mémorisées dans deux enregistrements distinct du fichier F2 formant chacun un conteneur de données. Le fichier F1 contient une date de limite de validité de la carte au-delà de laquelle, la carte ne peut plus être exploitée.

Il est connu de disposer d'une commande de sélection de répertoire et de fichier courants. Ces commandes permettent traditionnellement de mettre à jour des moyens de pointage 20, généralement sous la forme de deux pointeurs 21 et 22 contenant respectivement l'adresse du répertoire et du fichier courants. Ainsi il est possible d'appliquer une commande d'écriture ou de lecture, ou plus généralement de traitement d'une donnée au sein d'un fichier sélectionné d'un répertoire courant.

Selon l'exemple en liaison avec la figure 1 et conformément à l'état de la technique, pour mettre à jour la valeur initiale de la balance du porte-monnaie électronique, il est nécessaire, après avoir mis sous tension la carte, de transmettre à la carte une première commande de sélection du répertoire D3 dédié à l'application A3. Une deuxième commande de sélection du répertoire D5 est également nécessaire pour sélectionner le répertoire D5 et définir ce dernier comme nouveau répertoire courant. Une troisième commande doit en outre être transmise pour sélectionner le fichier F7 comme fichier courant. Suit une commande d'écriture de la donnée « balance » du conteneur fichier courant F7.

Toujours suivant cet exemple, pour mettre à jour l'historique des opérations de débit et/ou crédit, des données du fichier F8 doivent être initialisées. Pour cela, une commande de sélection de fichier courant est à nouveau nécessaire pour définir F8 comme nouveau fichier courant. Dans le cas d'un fichier F8 contenant plusieurs enregistrements, une série de commandes d'écriture est transmise à la carte pour mettre à jour chaque conteneur de données matérialisé respectivement par chaque enregistrement de F8. A présent pour initialiser les données secrètes contenues dans le fichier F6, il est nécessaire d'appliquer une commande de sélection du répertoire parent de D5 pour que D3 soit considéré comme répertoire courant puis une commande de sélection du répertoire D4 pour que ce dernier deviennent à son tour le répertoire courant. La commande suivante est une commande de sélection du fichier F6 pour que ce dernier soit considéré comme étant le fichier courant. L'écriture de la valeur de référence du secret peut à présent être mise en oeuvre.

Au préalable, il peut être nécessaire de satisfaire à un contrôle d'autorisation préalable à la modification dudit secret. Après cette étape, une commande d'écriture de la valeur de référence du secret peut être transmise à la carte afin d'initialiser la donnée du conteneur F6.

Nous pourrions prendre comme autres exemples, l'initialisation des données des fichiers F2 à F5.

Nous pouvons constater que les différentes étapes d'écritures nécessitent une série conséquente de commandes de sélection de répertoire et de fichier pour mettre à jour les moyens de pointage. Ces commandes ont pour conséquences d'étendre la durée du processus de personnalisation et de rendre ce dernier onéreux pour l'opérateur.

En outre, la nature des commandes d'écriture peut varier selon qu'un fichier ne contienne qu'une donnée ou plusieurs, que le fichier se présente sous la forme d'un conteneur simple ou d'une pluralité de conteneurs. Selon les applications présentes sur la carte, la syntaxe, les autorisations, les paramètres des commandes d'écritures peuvent en outre être différents pour mettre à jour le contenu de fichiers appartenant à un répertoire dédié respectivement à des applications distinctes rendant la processus de personnalisation électrique complexe à mettre en oeuvre.

L'invention permet de résoudre les inconvénients précédemment évoqués en prévoyant selon un mode de réalisation préféré une table des identificateurs dans une mémoire de la carte ou de tout dispositif électronique adapté en conséquence.

La figure 2 permet d'illustrer un tel mode de réalisation de l'invention. Outre une mémoire 11, éventuellement des moyens de pointage 20 similaires à ceux illustrés par la figure 1, le calculateur électronique 2 d'une carte à puce 1 selon l'invention est adapté pour comporter une mémoire 12 pour stocker une table des identificateurs 12a.

L'adaptation peut consister à doter le calculateur de ladite deuxième mémoire 12. En variante l'adaptation peut consister à doter le calculateur de moyens lui permettant d'accéder en lecture et en écriture à une deuxième mémoire 12 distante. Selon cette seconde variante, ladite deuxième mémoire 12 est une mémoire d'un dispositif électronique tiers apte à établir une communication filaire ou sans contact avec la carte à puce 1 conforme à l'invention.

Par souci de simplicité, nous parlerons de « deuxième mémoire 12 du dispositif conforme à l'invention » pour englober ces deux variantes de réalisation.

La table des identificateurs 12a comporte une ou plusieurs entrées. Dans l'exemple illustré par la figure 2, trois entrées 100, 200 et 300 sont représentées. Chaque entrée comporte une pluralité de champs 101 à 104, 201 à 204 et 301 à 304 dont certains sont obligatoires et d'autres optionnels. Un premier champ tel 101, 201 et 301 est obligatoire pour toute entrée d'une table des identificateurs telle la table 12a. Il correspond à un identificateur de donnée d'un conteneur.

Dans un mode de réalisation préféré de l'invention, la valeur d'un identificateur de donnée est unique. Un deuxième champ tel 102, 202, 302 d'une entrée d'une table des identificateurs telle la table 12a, est obligatoire. Il correspond à une référence de donnée d'un conteneur. Cette référence de donnée permet à l'unité de traitement du calculateur 2 de pointer précisément dans la mémoire 11 la donnée dont la valeur est à traiter.

Le calculateur 2 selon l'invention est adapté pour mettre à disposition du monde extérieur une ou plusieurs commandes dites commandes de traitement, aptes à traiter une donnée mémorisée dans une mémoire 11 dudit calculateur en exploitant une table des identificateurs telle la table 12a.

Selon un premier exemple de commande de traitement, considérons une commande d'écriture pour initialiser à une valeur BAL_INIT une donnée correspondant à la balance d'une application de type porte-monnaie électronique. Considérons pour cela qu'une mémoire 11 telle que celle décrite en liaison avec la figure 1 ait été préalablement initialisée dans le calculateur 2 d'une carte à puce 1. La donnée que l'on cherche à traiter est présente dans le conteneur F7 du répertoire D5. Selon cet exemple une table des identificateurs 12a contenue dans une mémoire 12 du calculateur 2 comporte une entrée 100 dont un premier champ 101 correspond à identificateur assigné à la donnée correspondant à ladite balance. La valeur de l'identificateur de donnée peut prendre toute valeur à partir du moment où celle-ci permet d'identifier la donnée « balance » du porte-monnaie électronique.

A titre d'exemple, la valeur hexadécimale 0x01 peut être utilisée. L'entrée 100 comporte en outre un champ 102 pour pointer la donnée dans la mémoire 11. Cette référence peut être une adresse directement exploitable par le calculateur 2. La référence peut également se traduire sous la forme d'un couple de pointeurs tels les valeurs 21 et 22 des moyens de pointage 20 du calculateur 2 pour que ce dernier puisse retrouver directement le répertoire D5 et le fichier F7 où se trouve la donnée. Les champs 103 et 104 représentés dans la figure 2 peuvent être absents ou prendre une valeur neutre car ces derniers ne sont pas utiles pour traiter cette donnée.

Prenons comme deuxième exemple l'initialisation de la valeur de référence d'un secret personnel nécessaire à l'authentification d'un utilisateur de carte. Cette information correspond à une donnée du conteneur F6 du répertoire D4. Pour mettre à jour cette donnée, la table 12a comprend une entrée 200 comportant un identificateur de donnée 201 dont la valeur, par exemple égale à 0x02, a été assignée à la donnée représentative de la valeur de référence du secret. L'entrée 200 comporte en outre un champ 202 permettant de pointer directement en mémoire 11, la donnée contenue dans F6 au sein du répertoire D4.

Selon notre exemple, considérons qu'une étape d'autorisation préalable soit requise pour modifier la valeur de référence du secret. Un champ 203 est à ce titre présent dans l'entrée 200. La valeur de ce champ permet de spécifier un niveau de sécurité requis. Cette valeur peut être un code représentatif d'un niveau de sécurité ou encore une référence d'un code secret ou d'une clé, d'un algorithme d'authentification... Enfin, un champ 204 représenté dans la figure 2 peut être absent ou comporter une valeur neutre.

Comme troisième exemple, considérons le fichier F8 pour contenir l'historique des opérations de débit/crédit. Cet historique peut par exemple relater les cinq dernières opérations. Cinq enregistrements sont donc prévus et nécessitent d'être initialisés et formatés. Selon une première méthode, il est possible d'assigner autant d'identificateurs de données que d'enregistrements et ainsi disposer d'autant d'entrées dans la table 12a. Selon une variante, nous pouvons considérer les cinq enregistrements comme un tout, une donnée unique certes complexe et lui associer une seule et unique entrée dans la table 12a.

La figure 2 permet d'illustrer cette dernière variante. Une entrée 300 est ainsi prévue dans la table 12a. Un premier champ 301 correspond à l'identificateur de donnée associé à la donnée « historique ». La valeur de ce champ peut par exemple être 0x03. Un champ 302 permet de pointer précisément la donnée « historique » dans la mémoire 11.

La mise à jour de l'historique ne requérant pas de mécanisme de sécurité préalable, le champ 303 peut être absent ou comprendre une valeur neutre. L'entrée 300 comporte en outre un champ 304 pour contenir une référence d'un script de traitement de la donnée « historique ». Ce script peut par exemple comporter une série d'opérations d'écriture pouvant être mise en oeuvre par le calculateur 2. Ce programme ou script de traitement peut être stocké dans une troisième mémoire du calculateur 2 non représentée sur la figure 2. Selon cette variante, la commande de traitement de la donnée « historique » exploitant la table 12a s'apparente à l'exécution d'un script de traitement sur la donnée pointée par le champ 302.

L'invention prévoit plusieurs modes de réalisation pour formater et exploiter les champs d'une entrée d'une table des identificateurs. La taille respective desdits champs peut être prédéfinie. Selon une variante l'invention peut prévoir l'utilisation de marqueurs et d'informations de longueurs de champs. Plus généralement, l'invention ne serait être limitée par le choix d'une méthode de formatage particulière d'une table des identificateurs ni par le nombre et/ou la nature des champs présents dans une entrée de table.

Il est également possible de prévoir une table des identificateurs par application ou plus généralement une pluralité de tables des identificateurs au sein d'un mémoire d'un dispositif adapté selon l'invention. Plus généralement, l'invention prévoit d'adapter un dispositif électronique pour le doter de moyens pour associer à une donnée d'un conteneur au moins un identificateur de donnée et une référence de donnée, une table des identificateurs n'étant qu'un mode de réalisation préféré.

Selon ce mode de réalisation préférée, l'invention prévoit en outre une commande pour trier les entrées d'une table des identificateurs pour que les entrées requérant par exemple un même niveau de sécurité soient contigües dans la table des identificateurs. Ainsi, en liaison avec la figure 2, un tri de la table des identificateurs 12a peut être mis en oeuvre par le dispositif 1 pour que pour que les entrées 100, 200 ou 300 de la table des identificateurs comportant un identificateur de sécurité 103, 203 ou 303 identique soient contigües dans la table des identificateurs 12a. Cette possibilité permet d'optimiser le temps nécessaire au déroulement de la personnalisation électrique. En effet il est ainsi possible de grouper les étapes de traitement par niveau de sécurité et ainsi procéder à l'exécution de mécanismes préalables d'autorisation en juste nombre nécessaire. D'autres critères pourraient être utilisés pour grouper les étapes de traitement, par exemple en fonction de la nature des conteneurs, de la proximité d'emplacement mémoire...

Une table des identificateurs peut être créée et initialisée selon tout type de procédé.

L'invention prévoit toutefois un procédé particulièrement efficace pour créer une table des identificateurs et ainsi préparer l'étape ou les étapes de traitement.

Selon un mode de réalisation préféré, l'invention prévoit un procédé pour assigner un identificateur à une donnée d'un conteneur présent dans une mémoire d'un dispositif électronique. Ce procédé permet ainsi d'initialiser les moyens pour associer à une donnée d'un conteneur au moins un identificateur de donnée et une référence de donnée. Ainsi dans le cas où lesdits moyens se présentent notamment sous la forme d'une table des identificateurs, l'invention prévoit de créer conjointement une entrée dans une table des identificateurs lors de la création d'un conteneur ou de la sélection d'une donnée d'un conteneur.

L'invention prévoit la possibilité d'adapter une commande de création de répertoire ou de fichier pour que, pendant ou à l'issue de la création d'un répertoire ou un fichier, une entrée dans une table des identificateurs soit assignée et créée. Ainsi ladite commande de création de répertoire ou de fichier comporte un paramètre supplémentaire pour indiquer qu'une entrée d'une table des identificateurs doit être conjointement créée.

En liaison avec la figure 2, une commande de création de répertoire ou de fichier ainsi adaptée comporte des paramètres nécessaires pour que le calculateur 2 du dispositif électronique 1 puisse créer une entrée 100, 200 ou 300 ainsi que les champs 101 à 104, 201 à 204 et 301 à 304 correspondants.

L'invention peut prévoir d'adapter plus généralement une commande de création d'objet complexe dans la mémoire d'un dispositif électronique. Ainsi une telle commande peut correspondre à la création d'un secret dont notamment la valeur de référence est insérée parmi les informations « système » d'un descripteur de répertoire.

L'invention prévoit en outre de pouvoir adapter une commande de sélection de répertoire ou de fichier pour que pendant ou à l'issue de ladite sélection, une entrée dans une table des identificateurs soit assignée et créée. Ainsi ladite commande de sélection adaptée comporte un paramètre supplémentaire pour indiquer qu'une entrée de table des identificateurs doit être conjointement créée. En liaison avec la figure 2, la commande de sélection de répertoire ou de fichier comporte des paramètres nécessaires pour que le calculateur 2 du dispositif électronique 1 puisse créer une entrée 100, 200 ou 300 ainsi que les champs 101 à 104, 201 à 204 et 301 à 304 correspondants.

En variante, l'invention prévoit la possibilité d'ajouter des commandes spécifiques permettant l'association d'un identificateur à une donnée et par là-même la création d'une entrée dans une table des identificateurs en lieu et place d'une adaptation des commandes de création et/ou de sélection.

Selon un mode de réalisation préférée, lors de la création d'une entrée d'une table des identificateurs, une référence de donnée est directement déduite des moyens de pointage du calculateur d'un dispositif électronique. Ainsi en liaison avec les figures 1 et 2, pour mettre à jour la valeur d'un champ 102, 202 ou 302, l'invention prévoit que la valeur desdits champs puisse découler directement des valeurs des pointeurs 21 et 22.

La création d'une entrée peut ainsi être grandement facilitée. En outre, pour un dispositif électronique susceptible de déplacer dans une mémoire, telle la mémoire 11, l'emplacement physique de fichiers et/ou de répertoires lors de l'exploitation dudit dispositif, l'invention prévoit que les entrées d'une table des identificateurs, notamment la valeur des références des données puissent être automatiquement maintenues par le calculateur du dispositif électronique en cohérence avec les nouveaux emplacements de données.

Selon un mode particulier de réalisation, le calculateur d'un dispositif électronique conforme à l'invention, est apte à assigner un identificateur de donnée dont la valeur résulte de l'incrémentation ou de la décrémentation d'un compteur. En variante, la valeur d'un identificateur de donnée est déterminée lors d'une assignation par le calculateur à partir de moyens de génération de nombres aléatoires présents dans ledit calculateur.

L'invention prévoit également pour personnaliser le contenu d'une mémoire d'un calculateur d'un dispositif électronique ainsi adapté, un procédé qui comporte une ou plusieurs étapes pour associer un identificateur à une donnée d'un conteneur et une ou plusieurs étapes pour traiter ladite donnée selon des procédés pour assigner et/ou traiter conformes à l'invention.

L'invention permet ainsi de prévoir durant la création de données communes, une table des identificateurs dont les entrées sont par la suite exploitées par un opérateur pour personnaliser un dispositif électronique. Ce processus de personnalisation est très rapide au regard des solutions connues car un grand nombre de commandes, notamment de sélection, n'est plus nécessaire. Ce procédé permet en outre, de s'affranchir de la maîtrise des conteneurs par un opérateur. Un tel dispositif électronique adapté devient apte à interpréter la table des identificateurs et procéder aux opérations prévues et/ou demandées par l'opérateur, offrant ainsi une très grande souplesse et simplicité d'utilisation.

Bien que l'invention ait été décrite de préférence en liaison avec des cartes à puce, celle-ci concerne tout dispositif électronique tel un passeport, un dongle ou tout autre objet nécessitant une personnalisation du contenu d'une mémoire.

Un procédé de personnalisation (ou de traitement) rapide d'une carte à puce conforme à l'invention est illustré conformément à des étapes principales d'un mode particulier de mise en oeuvre ci-après et/ou parallèlement en relation avec l'exemple décrit précédemment sur les figures.

Selon le mode particulier un programme applicatif de la carte comprend un mécanisme permettant de réaliser la personnalisation rapidement.

Dans l'exemple, l'unité de traitement d'une carte est adaptée pour comporter des moyens permettant de réaliser une personnalisation électrique pour laquelle la durée du processus est minimisée.

Selon le mode particulier ou l'exemple, l'invention comprend une séparation de la création des conteneurs de types fichier, objet de sécurité, répertoire (...), des données ou enregistrements de valeurs ou de contenus;

Selon le mode particulier ou l'exemple, on procède de la manière suivante:
- détermination des données ou informations, dont la ou les valeurs sont à charger dans la carte voire de préférence détermination du niveau de sécurité requis pour pouvoir mettre à jour lesdites données ;
- création des conteneurs de donnée(s) dans la carte et association d'un identificateur aux données de conteneurs créés. L'association s'effectue de préférence en même temps que la création à l'aide d'un logiciel d'assistance à la création de conteneurs et association prévue à cet effet.

Selon ledit mode particulier, l'association est réalisée via une table de correspondance d'identificateurs par rapport aux conteneurs ou fichiers avec le cas échéant d'autres paramètres de tri notamment un niveau de sécurité ou opérations communes ou conjointes réalisées pour traiter une donnée concernée par un identificateur.

Selon ce mode particulier, une commande reçue par la carte telle que "Associate DGI to EF" va associer une valeur d'identificateur à un fichier élémentaire de donnée (ou conteneur) courant. En outre, à chaque fois que cette commande est reçue, la valeur de l'identificateur est ajoutée à la table interne du logiciel pour créer un lien d'une zone du fichier courant avec l'identificateur.

Dans l'exemple, les étapes de création de conteneur et d'association peuvent être mises en oeuvre par l'unité de traitement de la carte au moyen d'un logiciel embarqué dans une mémoire de programme. Selon une réalisation préféré dans l'exemple, on associe « donnée - identificateur, référence de donnée » au moyen d'une table des identificateurs.

Ainsi le logiciel embarqué permet l'utilisation d'une commande de création de conteneur pour associer une valeur d'identificateur audit conteneur créé, par exemple un fichier. A chaque création de conteneur de donnée, un identificateur peut ainsi être associé au moyen de la table des identificateurs, si l'on considère que la donnée est susceptible d'être traitée ultérieurement afin d'être personnalisée.

Dans le but de minimiser le temps nécessaire au processus de personnalisation, il est préférable que les entrées de la table des identificateurs soient classées selon des critères de sécurité et/ou d'opérations de traitement impliquant des étapes similaires ou communes. Pour cela, les commandes de création de conteneur intégrant une création d'entrée dans la table des identificateurs peuvent être transmises à la carte selon un ordre choisi et pertinent.

Selon ledit mode particulier, de préférence, le procédé comporte une étape de classement des identificateurs (containers ou données à traiter) selon des critères de sécurité et/ou d'opérations de traitement impliquant des étapes similaires ou communes.

Toujours selon le mode particulier, le procédé comporte une étape d'obtention d'une liste des identificateurs et de préférence dans un ordre de classement comme indiqué ci-dessus pour un traitement ultérieur des données (valeurs) dans cet ordre. Pour cela un logiciel effectue un tri et classement des identificateurs selon les critères ci-dessus. Le logiciel s'exécute par exemple en réponse à une commande telle que "Get DGI list" qui tri et communique la liste des identificateurs tels que ordonnés par le tri.

Dans l'exemple, l'unité de traitement dispose d'une commande de tri de ladite table pour agencer à l'issue de la création des conteneurs, la table des identificateur selon des critères de sécurité et/ou d'opérations de traitement impliquant des étapes similaires ou communes.

Cette commande peut être déclenchée depuis le monde extérieur ou automatiquement par l'unité de traitement de la carte. Le contenu de la table peut également être lu depuis le monde extérieur de sorte que les commandes de traitement puissent être transmises à la carte selon un ordre pertinent.

Un fichier élémentaire peut être vu sous la forme d'une pluralité de conteneurs de donnée. Dans ce cas, plusieurs identificateurs pourront être associés audit fichier.

Selon ledit mode particulier, le procédé, comporte de préférence, une préparation d'une carte de référence tout en conservant les conteneurs de données non remplis (C'est-à-dire fichiers, Objet de sécurité).La police de sécurité est définie pour toute la carte et s'applique immédiatement à une application de personnalisation (ou de traitement).

Dans l'exemple, grâce aux commandes de création de conteneur, une carte de référence peut être préparée et dupliquée en un lot de cartes.

Selon le mode particulier, une application de personnalisation (ou de traitement) demeure de préférence en place pour laisser l'utilisateur final personnaliser lui même.

Toujours selon ledit mode particulier, le procédé comporte une étape de préparation des bases de données contenant l'information à charger. Les identificateurs de conteneurs sont utilisés pour lier les données dans la base avec les conteneurs dans la carte.

Toujours selon ce mode particulier, les cartes sont personnalisées avec les données ou information préparées. Des commandes par exemple de chargement (ou de sélection) contiennent au moins les valeurs des données à chargées et un champ pour l'identificateur et éventuellement un niveau de sécurité associé.

Dans l'exemple, les cartes sont personnalisées une par une à l'aide d'informations préparées et groupées au moyen d'une base données des utilisateurs par exemple. Des commandes de mise à jour de données sont transmises à chaque carte avec comme paramètres une valeur de donnée et un identificateur.

Selon le mode particulier, de préférence, chaque conteneur d'objet de sécurité a de préférence un unique identificateur qui peut être utilisé au moment de chargement des secrets de l'utilisateur final dans la carte.

Toujours selon le mode particulier, l'application de personnalisation reçoit la commande, en extrait l'identificateur et veille à ce que l'identificateur ou niveau de sécurité corresponde à celui attendu par la carte d'après le classement préétabli. En particulier, l'application veille à ce qu'un canal sécurisé soit établi éventuellement par anticipation.

Encore selon le mode particulier, l'identificateur extrait de la commande est retrouvé dans la table par l'application de personnalisation ainsi que le conteneur ou fichier associé à l'identificateur (via notamment son adresse) pour y stocker la valeur ou information associée à l'identificateur dans la commande de chargement précitée. L'application de chargement de la carte pourra de préférence être ensuite désactivée dans la carte.

Dans l'exemple, la commande de mise à jour conforme à l'invention extrait l'identificateur et parcourt la table des identificateurs de la carte à personnaliser.

Dans l'exemple, en liaison avec la figure 2, l'entrée de table comportant un champ 101, 201 ou 301 comportant une valeur d'identificateur identique à la valeur d'identificateur passée en paramètre, permet à la commande de pointer le conteneur en mémoire et ainsi d'effectuer le traitement de la donnée. Cette dernière est pointée au moyen du champ 102, 202 ou 302 associé à l'identificateur dans la table des identificateurs. Selon une variante d'utilisation tout ou partie des commandes de mise à jour de donnée conformes à l'invention pourront être désactivées à l'issue du processus de personnalisation.

## Revendications

1. Procédé pour traiter une donnée d'un conteneur (F1, F2, ..., F8) stocké dans une première mémoire (11) d'un dispositif électronique (1), **caractérisé en ce qu'**il comporte :
- une étape de consultation de moyens d'association (12a), lesdits moyens d'association permettant d'associer à une donnée d'un conteneur, un identificateur de donnée (101, 201, 301) et une référence de donnée (102, 202, 302);
- une étape de traitement de ladite donnée en exploitant ladite référence de donnée (102, 202, 302).

2. Procédé selon la revendication 1 **caractérisé en ce que** l'étape de consultation consiste à lire une entrée (100, 200, 300) d'une table des identificateurs (12a), ladite table étant stockée dans une deuxième mémoire (12) du dispositif (1), ladite entrée (100, 200, 300) étant dédiée à la donnée à traiter et comprenant l'identificateur de donnée (101, 201, 301) et la référence de donnée (102, 202, 302).

3. Procédé selon la revendication 2 **caractérisé en ce que** l'étape de traitement est conditionnée au bon déroulement d'une étape préalable d'autorisation de ladite étape de traitement, l'étape d'autorisation exploitant un identificateur de sécurité (103, 203, 303) présent en outre dans l'entrée (100, 200, 300) de la table des identificateurs (12a) associée à la donnée traitée.

4. Procédé selon l'une quelconque des revendications précédentes **caractérisé en ce que** la référence de donnée (102, 202, 302) permet de pointer directement la donnée du conteneur dans la première mémoire (11) et **en ce que** l'étape de traitement consiste à lire ou modifier la donnée en exploitant la référence de donnée.

5. Procédé selon les revendications 2 ou 3 **caractérisé en ce que** l'étape de traitement consiste à appliquer un script de traitement à la donnée en exploitant dans l'entrée (100, 200, 300) de la table des identificateurs (12a) la référence de donnée (102, 202, 302) et une référence de script de traitement (104, 204, 304) présente en outre dans l'entrée de la table des identificateurs (12a) et permettant de pointer un script de traitement stocké dans une troisième mémoire du dispositif.

6. Procédé selon l'une quelconque des revendications 1 à 5 **caractérisé en ce qu'**il comporte au préalable :
- une étape de création d'un conteneur de donnée ou de sélection d'une donnée d'un conteneur pour initialiser des moyens de pointage (20, 21, 22) de ladite donnée dans la première mémoire (11) du dispositif (1);
- une étape pour associer à la donnée, un identificateur de donnée (101, 201, 301) et une référence de donnée (102, 202, 302) dont la valeur est définie en exploitant les moyens de pointage (20, 21, 22) initialisés par l'étape de création de conteneur ou de sélection de donnée.

7. Procédé selon les revendications 6 et 2 **caractérisé en ce que** l'étape pour associer consiste à créer une entrée (100, 200, 300) dans la table des identificateurs (12a), ladite entrée étant dédiée à la donnée et comprenant l'identificateur de donnée (101, 201, 301) et la référence de donnée (102, 202, 302).

8. Procédé selon la revendication 7 **caractérisé en ce que** l'étape de création d'une entrée consiste en outre à prévoir dans l'entrée (100, 200, 300) de la table des identificateurs (12a), un identificateur de sécurité (103, 203, 303) pour conditionner au bon déroulement d'une étape d'autorisation un futur traitement de la donnée considérée.

9. Procédé selon les revendications 7 ou 8 **caractérisé en ce que** l'étape de création d'une entrée consiste en outre à prévoir dans l'entrée (100, 200, 300) de la table des identificateurs (12a), une référence de script (104, 204, 304), ladite référence de script permettant de pointer un script de traitement stocké dans une troisième mémoire du dispositif.

10. Procédé selon l'une quelconque des revendications 2 à 9 **caractérisé en ce qu'** il comporte une étape pour trier la table des identificateurs (12a) pour que les entrées (100, 200, 300) de la table des identificateurs (12a) comportant un identificateur de sécurité (103, 203, 303) identique soient contigües dans la table des identificateurs (12a).

11. Procédé selon l'une quelconque des revendications 2 à 9 **caractérisé en ce qu'** il comporte une étape pour trier la table des identificateurs (12a) pour que les entrées (100, 200, 300) de la table des identificateurs (12a) associées à des données destinées à être traitées selon une étape de traitement similaire ou conjointe soient contigües dans la table des identificateurs (12a).

12. Dispositif électronique (1) comprenant une première mémoire (11) pour stocker une donnée dans un conteneur, **caractérisé en ce qu'**il comporte :
- des moyens d'association (12, 12a) pour associer à une donnée d'un conteneur, un identificateur de donnée (101, 201, 301) et une référence de donnée (102, 202, 302);
- des moyens (2) pour traiter une donnée d'un conteneur apte à mettre en oeuvre un procédé de traitement conforme à la revendication 1.

13. Dispositif électronique (1) selon la revendication 12 **caractérisé en ce que** :
- les moyens d'association consistent en une deuxième mémoire (12) pour contenir une table des identificateurs (12a);
- les moyens (2) pour traiter une donnée d'un conteneur sont aptes à mettre en oeuvre un procédé de traitement conforme à l'une des revendications 2 à 4.

14. Dispositif électronique (1) selon la revendication 13 **caractérisé en ce qu'**il comporte en outre une troisième mémoire pour contenir un script de traitement et **en ce que** les moyens (2) pour traiter une donnée d'un conteneur sont aptes à mettre en oeuvre un procédé de traitement conforme à la revendication 5.

15. Dispositif électronique selon l'une quelconque des revendications 12 à 14 **caractérisé en ce qu'**il comporte en outre:
- des moyens de pointage (20, 21, 22) d'une donnée d'un conteneur stocké dans la première mémoire (11) du dispositif ;
- des moyens (2) pour initialiser les moyens d'association pour associer un identificateur à une donnée d'un conteneur aptes à mettre en oeuvre un procédé conforme à l'une des quelconques des revendications 6 à 11.
